# EUROPEAN PATENT SPECIFICATION

(11) **EP 2 450 226 B1**
(45) Date of publication and mention of the grant of the patent: **02.04.2014**
(21) Application number: 11008892.9
(22) Date of filing: 08.11.2011
(51) Int. Cl.: B60N 2/28

(54) **Child seat**
Kindersitz
Siège pour enfant

(30) Priority: 08.11.2010 JP 2010249331; 22.09.2011 JP 2011207487
(43) Date of publication of application: 09.05.2012
(73) Proprietor: Takata Corporation, Tokyo 107-8508 (JP)
(72) Inventor: Yoshida, Junichi, Tokyo 107-8508 (JP)
(74) Representative: Banzer, Hans-Jörg

(56) References cited:
- US-A- 6 030 047
- US-A1- 2002 043 837

## Description

This application claims the priorities based on Japanese Patent Application No. 2010-249331 filed on November 8, 2010 and Japanese Patent Application No. 2011-207487 filed on September 22,2011, the entire specifications, claims and drawings of which are herein incorporated in this specification by reference.

The present invention relates to a child seat, and more particularly, a child seat that enables adjustment of, at the backrest, the height of shoulder harness of a restraint mechanism that restrains a sitting child.

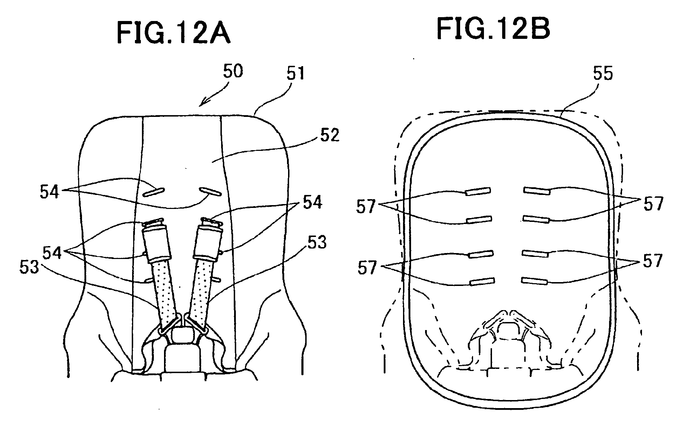

Child seats are used in order to safely restrain the body of a child riding on a vehicle. Child seats have an attachment scheme established depending on the weight of a sitting child and an approximate age thereof. Moreover, even if a child seat is attached to a vehicle in an appropriate attachment manner, it is necessary to adjust the height of a shoulder harness to a position appropriate for the body type of a sitting child. The "height of a shoulder harness" means the height of a shoulder harness supported at the back of the child seat (in the example case shown in FIG. 12A, the height of shoulder harness through holes **54** used).

According to a current standard (e.g., an EC standard), when a sitting child has a weight less than 13 kg (generally, a newborn baby to nine months old), the child seat must be attached to a seat of a vehicle in a backward-looking posture, and in the case of a child up to about four years old (weight: 13 to 18 kg), the child seat must be attached in a forward-looking posture. According to a child seat which is expected to be used for a child from a newborn baby to about four years old, various devisal are made so that the attachment scheme thereof and the height of a shoulder harness can be adjusted in accordance with the body type of a sitting child.

FIG. 12A is a partial front view showing an illustrative and conventional child seat 50. The child seat **50** has shoulder harness through holes **54** formed at four height positions with a predetermined interval in the height direction. In the example case shown in FIG. 12A, shoulder harnesses **53** are attached to a back **52** through the second shoulder harness through holes **54** from the top. As shown in FIG. 12B, a main body shell **55** of the child seat **50** has through holes **57** formed at the same positions as those of the shoulder harness through holes **54** formed in a seat cushioning **51.** An end of the shoulder harness **53** is inserted in the shoulder harness through hole **54** of the seat cushioning **51** and the through hole **57** of the main body shell **55.** The end of the shoulder harness **53** runs to the lower end of the main body shell **55** at the rear side thereof, and is fastened to a fastening hook (unillustrated) provided at the lower end of the main body shell **55.**

In order to appropriately use the shoulder harnesses **53** of the child seat **50** employing the above-explained configuration, when the child seat **50** is attached to a seat in a backward-looking posture, an end of the shoulder harnesses **53** is fastened at the rear side of the main body shell 55 using the shoulder harness through hole **54** same as or lower than the height of the shoulder of a child in a posture like slightly laying down. Conversely, when the child seat **50** is attached to the seat in the forward-looking posture, the end of the shoulder harness **53** is fastened at the rear side of the main body shell **55** using the shoulder harness through hole **54** same as or slightly higher than the height of the shoulder of a sitting child.

Hence, it is necessary to adjust the height of the shoulder harness **53** in accordance with the growth of a child using the child seat **50** and the body type thereof when a plurality of children use the same child seat. In order to adjust the height of the shoulder harness **53,** however, it is necessary to release the end of the shoulder harness **53** from the hook (unillustrated), pull out it from the shoulder harness through hole **54,** insert such an end into a new shoulder harness through hole **54,** and fasten it again to the hook. Such works must be carried out with the child seat being detached from the seat of a vehicle.

A shoulder-belt-height adjusting mechanism for a child seat is proposed which facilitates the above-explained works. For example, according to the technology disclosed in Unexamined Japanese Patent Application KOKAI Publication No. H07-329706 (reference numerals below are from the embodiment disclosed in Unexamined Japanese Patent Application KOKAI Publication No. H07-329706), fastening slots **56** and **58** arranged in the front face of the back panel **24** with a predetermined interval in height are communicated with each other through a displacement channel **60.** A shoulder belt can be displaced between the fastening slots **56** and **58** through the displacement channel **60.** The back panel **24** has a cantilever beam **72** between the fastening slots **56** and **58** reinforced by predetermined reinforcement plates **74** and **76.**

According to the child seat disclosed in Unexamined Japanese Patent Application KOKAI Publication H07-329706, it is necessary to adjust the height of the shoulder belt for each right and left shoulder belt in accordance with the positions of the right and left fastening slots provided in the front face of the back panel **24.** Moreover, the right and left attachment positions may be falsely set.

US 2002/0043837 A1 discloses a child seat according to the preamble of claim 1.

Hence, it is an object of the present invention to provide a child seat that facilitates adjustment of a shoulder harness to an appropriate height.

In order to achieve the above object, the present invention provides a child seat as defined in claim 1. The dependent claims define preferred embodiments of the present invention. A child seat according to the present invention allows adjustment of, at a backrest, respective right and left heights of right and left shoulder harnesses **(4)** restraining a sitting child, and includes: a main body shell **(1)** that has rod holding grooves **(14, 15)** which are a plurality of grooves arranged in a vertical direction and formed in a rear face of the main body shell **(1);** a back plate **(10)** which is disposed on a back of the main body shell **(1)** and is provided with shoulder harness through holes **(11)** where the right and left shoulder harnesses **(4)** are respectively inserted in order to support the right and left shoulder harnesses **(4);** and a rod height adjusting mechanism **(20)** which is provided at a rear face of the back plate **(10),** includes a harness support rod **(23)** that moves in the vertical direction together with the back plate **(10),** and changes a condition of the harness support rod **(23)** between a condition in which the harness support rod **(23)** is held in the rod holding groove **(14, 15)** and a condition in which the harness support rod **(23)** is released from the rod holding groove **(14, 15)** and is movable in the vertical direction. Note that a term sitting child includes a child in a posture similar to a laying-down posture.

The rod height adjusting mechanism **(20)** includes: a slider **(21)** which is attached to the rear face of the back plate **(10)** and which is slidable in the vertical direction while holding the harness support rod **(23);** a rod guiding block **(22)** which, together with a movement in the vertical direction in the slider **(21),** retains the harness support rod **(23)** in the rod holding groove **(14, 15)** or releases the harness support rod **(23)** from the rod holding groove **(14, 15)** in order to make the harness support rod **(23)** ascendable and descendable; and a biasing unit that biases the rod guiding block **(22)** in a direction in which the harness support rod **(23)** is retained in the rod holding groove **(14, 15),** and the harness support rod **(23)** is released from the rod holding groove **(14, 15)** when the rod guiding block **(22)** is moved relative to the slider **(21)** against biasing force by the biasing unit. This facilitates changing of the support position of the harness through a one-touch operation.

The slider **(21)** has a lateral slotted opening **(21b)** formed in a side face, the rod guiding block **(22)** has a rod guiding slit **(22b)** formed in a side face, the harness support rod **(23)** is inserted in the lateral slotted opening **(21b)** of the slider **(21)** and the rod guiding slit **(22b)** of the rod guiding block **(22),** and the harness support rod **(23)** moves along the lateral slotted opening **(21b)** and the rod guiding slit **(22b)** when the rod guiding block **(22)** is pushed down against the biasing unit, and thus is released from the rod holding groove **(14, 15).** Accordingly, a one-touch operation is realized by a compact mechanism.

The slider **(21)** has a lateral slotted opening **(21b)** formed in a side face, the rod guiding block **(22)** has a rod guiding slit **(22b)** formed in a side face, the harness support rod **(23)** is inserted in the lateral slotted opening **(21b)** of the slider **(21)** and the rod guiding slit **(22b)** of the rod guiding block **(22),** and the harness support rod **(23)** moves along the lateral slotted opening **(21b)** and the rod guiding slit **(22b)** when the rod guiding block **(22)** is pushed up against the biasing unit, and thus is released from the rod holding groove **(14, 15).** Accordingly, like the above-explained configuration, a one-touch operation can be realized by a compact mechanism.

It is preferable that the rod guiding block **(22)** is provided with a knob **(22c)** protruding toward the main body shell **(1),** and the back plate **(10)** is provided with an opening **(17)** where the knob **(22c)** is exposed and a recess **(18)** for assisting an operation given to the knob **(22c).** Accordingly, an operation similar to the one explained above is enabled from the front of the child seat.

It is preferable that the harness support rod **(23)** has flanges **(23a)** formed at both ends, the main body shell **(1)** has flange holding grooves **(14a)** formed adjacent to the rod holding groove **(14)** in the rear face, and when the harness support rod **(23)** is retained in the rod holding groove **(14, 15),** the flanges **(23a)** are retained in the flange holding grooves **(14a),** and thus a movement of the harness support rod **(23)** in an axial direction is suppressed. Accordingly, a stable movement of the harness support rod in the vertical direction is enabled.

It is preferable that the main body shell **(1)** is covered with a cover cushioning **(3)** provided with an opening **(7)** where a part of the back plate **(10)** is exposed, and a portion of the back plate **(10)** corresponding to the opening **(7)** is covered by a cover **(9).**

According to the present invention, it becomes possible to easily adjust a shoulder harness to an appropriate height.
FIG. 1 is a perspective view showing a main body shell of a child seat according to an embodiment of the present invention as viewed from diagonal front;
FIG. 2 is a perspective view showing the main body shell shown in FIG. 1 as viewed from diagonal rear;
FIG. 3 is a perspective view showing a rod height adjusting mechanism and a back plate exploded;
FIG. 4A is an explanatory diagram showing a height adjusting mechanism when a harness support rod is retained in a rod holding groove and a flange holding groove;
FIG. 4B is an explanatory diagram showing the height adjusting mechanism when a knob of a rod guiding block is pushed down;
FIG. 5A is an explanatory diagram showing a cross section of the rod height adjusting mechanism shown in FIG. 4A;
FIG. 5B is an explanatory diagram showing a cross section of the rod height adjusting mechanism shown in FIG. 4B;
FIG. 6 is a perspective view showing a rod height adjusting mechanism according to a second embodiment as viewed from a back-plate side;
FIG. 7A is an explanatory diagram showing the rod height adjusting mechanism of the second embodiment corresponding to FIG. 5A;
FIG. 7B is an explanatory diagram showing the rod height adjusting mechanism of the second embodiment corresponding to FIG. 5B;
FIG. 8A is an explanatory diagram showing a rod height adjusting mechanism of a third embodiment corresponding to FIG. 5A;
FIG. 8B is an explanatory diagram showing the rod height adjusting mechanism of the third embodiment corresponding to FIG. 5B;
FIG. 9 is an explanatory diagram showing a whole cover cushioning of a child seat;
FIG. 10A is an explanatory diagram showing an illustrative cover dedicated for a back plate and attached to a cover cushioning;
FIG. 10B is an explanatory diagram showing the illustrative back-plate-dedicated cover;
FIG. 10C is an explanatory diagram showing the illustrative back-plate-dedicated cover;
FIG. 11 is an explanatory diagram showing an example case in which the attachment characteristic of a cover cushioning is improved;
FIG. 12A is a front view showing a conventional child seat; and
FIG. 12B is a front view showing a main body shell of the conventional child seat.

Embodiments of a child seat according to the present invention will be explained below with reference to the accompanying drawings.

### <Rod height adjusting mechanism: First Embodiment>

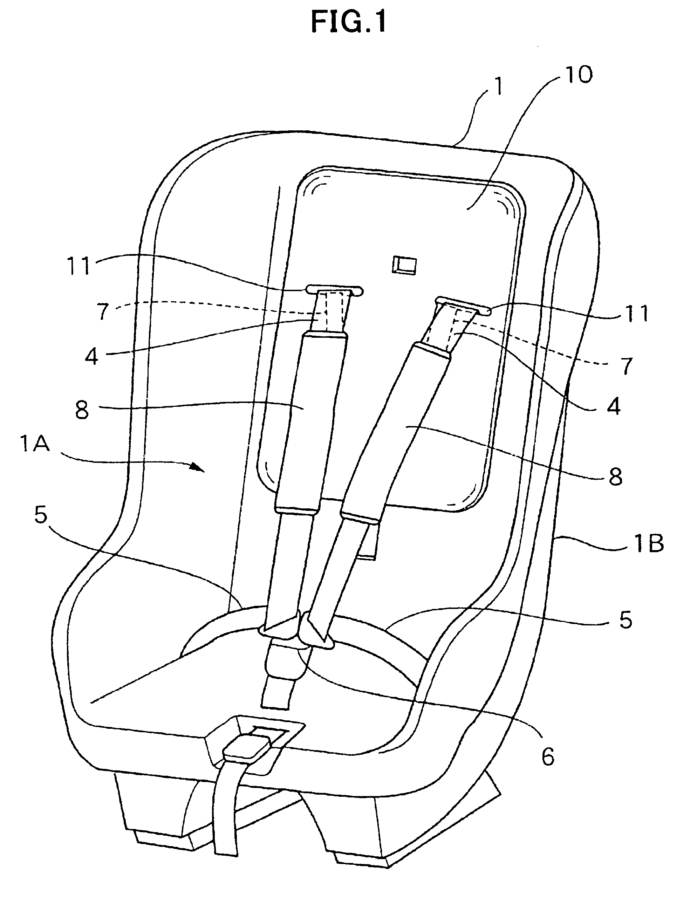

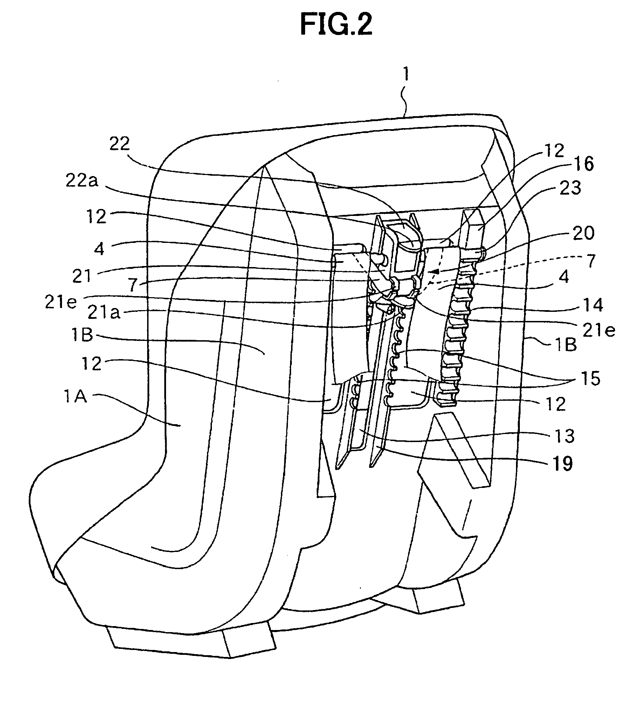

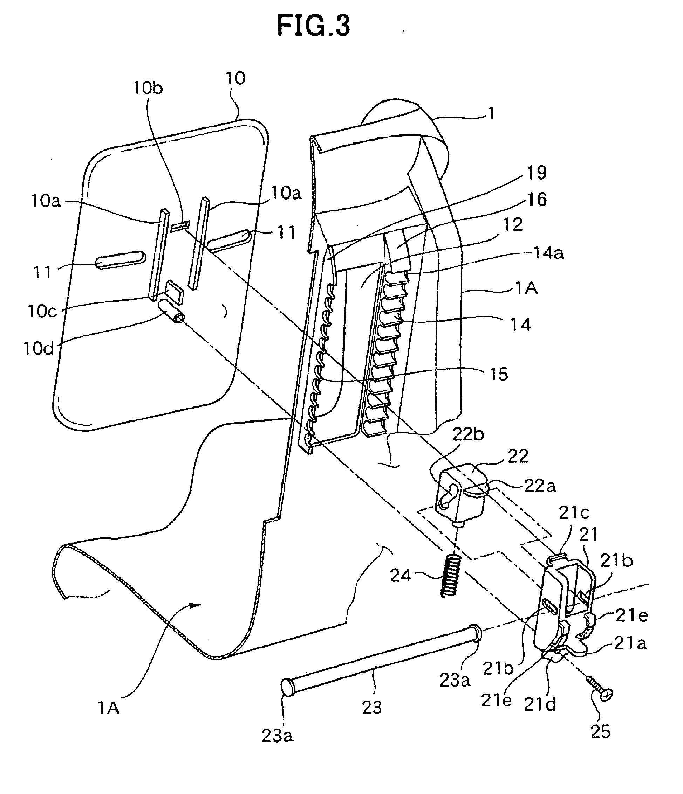

FIG. 1 is a perspective view showing a main body shell of a child seat of an embodiment as viewed from diagonal front. FIG. 1 shows a child seat in a condition in which shoulder harnesses **4,** a waist harness **5,** and a buckle **6** are attached to a main body shell **1** without a cover cushioning and other cushionings (options, such as a head cushioning). Attached to the rear of the main body shell **1** is a back plate **10** that is held at a predetermined height by a rod height adjusting mechanism **20** (see FIG. 2) discussed later. The back plate **10** has shoulder harness through holes **11** formed slightly above the middle position in the height direction. The shoulder harness **4** has an upper end position held at the height of the shoulder harness through hole **11.** The shoulder harness **4** is wrapped by a belt-like pad **8.** The pad **8** has a function of gently holding a portion from the chest of a child to the shoulder thereof when the sitting child is restrained by the shoulder harness **4.** Moreover, the right and left pads **8** are provided with a pad position holding belt **7** that interconnects respective upper ends of the pads **8.** The pad position holding belt **7** is a belt and is caught by a part of a slider **21** (belt insert hooks **21e:** see FIGS. 2 and 3) at the rear side of the main body shell **1** of the child seat. Accordingly, respective pads **8** have positions stably held with respective shoulder harnesses **4** being inserted therein.

FIG. 2 is a perspective view showing the main body shell **1** of FIG. 1 as viewed from the back. As shown in FIGS. 1 and 2, the main body shell **1** is provided with a child retaining part **1A** of a curved surface, and two main-body frames **1B.** The child retaining part **1A** includes a seat portion where a child sits down and a backrest where the child reclines. The two main-body frames **1B** hold the child retaining part **1A** in order to maintain the rigidity of the main body shell **1.** Formed at the rear of the child retaining part **1A,** located between the two main-body frames **1B,** are two openings **12** and a slider holding opening **13,** the two opening **12** adjusting the height of a harness, and the slider holding opening **13** being located between the two openings **12.** The opening **12** has a width wider than that of the shoulder harness through hole **11.** The right and left shoulder harnesses **4** are inserted from the front sides of respective shoulder harness through holes **11** of the back plate **10** of the main body shell **1,** and are suspended to a harness support rod **23** which are disposed horizontally. The ends of the right and left shoulder harnesses **4** are guided to respective connectors (unillustrated) located downwardly. The harness support rod **23** runs horizontally, and has a center part supported by a rod height adjusting mechanism **20.** The harness support rod **23** slides in the vertical direction at the rear side of the main body shell **1** together with the slider **21** along the slider holding opening **13.**

Rod holding grooves **14** are successively formed in the vertical direction in edges **16** of the opening **12** for adjusting the height of the harness provided in the rear surface of the main body shell **1** across a range where the harness support rod **23** is ascendable and descendable. Moreover, like the rod holding grooves **14,** rod holding grooves **15** are successively formed in the vertical direction in vertical ribs **19** that partition a space between the slider holding opening **13** and the opening **12** for adjusting the height of the harness across a range where the harness support rod **23** is ascendable and descendable. Each rod holding groove **14** and **15** is a semi-circular groove having an internal diameter slightly larger than the rod diameter of the harness support rod **23.** As shown in FIG. 2, the harness support rod **23** is retained in the rod holding grooves **14** and at the same height so that the harness support rod **23** runs horizontally. The main body shell 1 may have the rod holding grooves **15** indirectly formed in the rear face by having a member formed with the rod holding grooves **15** and attached to the rear face.

FIG. 3 is an exploded perspective view showing in an exploded manner the back plate 10 located at the front of the main body shell **1** and the rod height adjusting mechanism **20** for adjusting the height of the harness support rod **23.** In the case of FIG. 3, as is clear from the shape of the rear side of the back plate **10,** portions of the main body shell **1** are omitted. Formed between the two shoulder harness through holes **11** at the rear of the back plate **10** are slide guides **10a,** a catch opening **10b,** a spring holding protrusion **10c,** and a slider fastening mount **10d** which are formed of a synthetic resin, etc., integral with the back plate main body. Conversely, the rod height adjusting mechanism **20** (see FIG. 2) provided at the rear of the main body shell **1** includes the harness support rod **23,** the slider **21,** a rod guiding block **22** retained in the slider **21,** and a spring **24** biasing the rod guiding block **22** upwardly.

The harness support rod **23** is formed of a steel bar having flanges **23a** formed at both ends in the present embodiment. The harness support rod **23** is supported by the rod guiding block **22** built in the slider **21,** and is retained in the rod holding grooves **14** and **15** at the predetermined height. Flange holding grooves **14a** are formed in the external surfaces of respective rod holding grooves **14.** The flanges **23a,** provided at both ends of the harness support rod **23,** are retained in respective flange holding grooves **14a.** Accordingly, as will be discussed later, when the height of the harness support rod **23** is adjusted, it is possible to prevent the harness support rod **23** from getting out of position in the axial direction. The rod holding grooves **14** and **15** are not limited to ones successively formed in the vertical directions, but may be formed in the vertical direction with a predetermined pitch. In this case, the harness support rod **23** is retained in the rod holding grooves **14** with the predetermined pitch groove by groove. In this case, it is preferable to form, at positions which correspond to the flanges **23a** and where no rod holding groove **14** is formed, thin-line grooves of successive flange holding grooves **14a** each having a shallow depth as much as the flange width of the flange **23a.** This allows a part of the flange **23a** to move along the linear flange holding groove **14a** when the harness support rod **23** is moved up and down. Accordingly, it is possible to prevent the harness support rod **23** from getting out of position in the axial direction.

The slider **21** is a hollow molded part formed of a synthetic resin. As shown in FIG. 3, the slider **21** has lateral slotted openings **21b** which are formed at side faces and through which the harness support rod **23** passes, a knob **21a** and a belt inserting hook **21e** at a rear face, a catch hook **21c** at the upper ends, and a fastening screw hole **21d** at the lower ends. The slider **21** is fixed to the back plate **10** by the catch hook **21c** and the fastening screw hole **21d.** Moreover, as shown in FIG. 2, the pad position holding belt **7** is inserted in the belt inserting hook **21e** in a slidable manner. Since the pads **8** are attached to both ends of the pad position holding belt **7** (see FIG. 1), the pads **8** can have respective heights held at appropriate positions with the shoulder harness **4** being inserted in the pad **8.**

As shown in FIG. 3, the rod guiding block **22** is a hollow resin-mold part formed in a rectangular box shape. The rod guiding block **22** is retained in the slider **21,** and is biased upwardly by the spring **24** in the slider **21.** The rod guiding block **22** can move downwardly in the slider **21** by being pushed down through the knob **22a.**

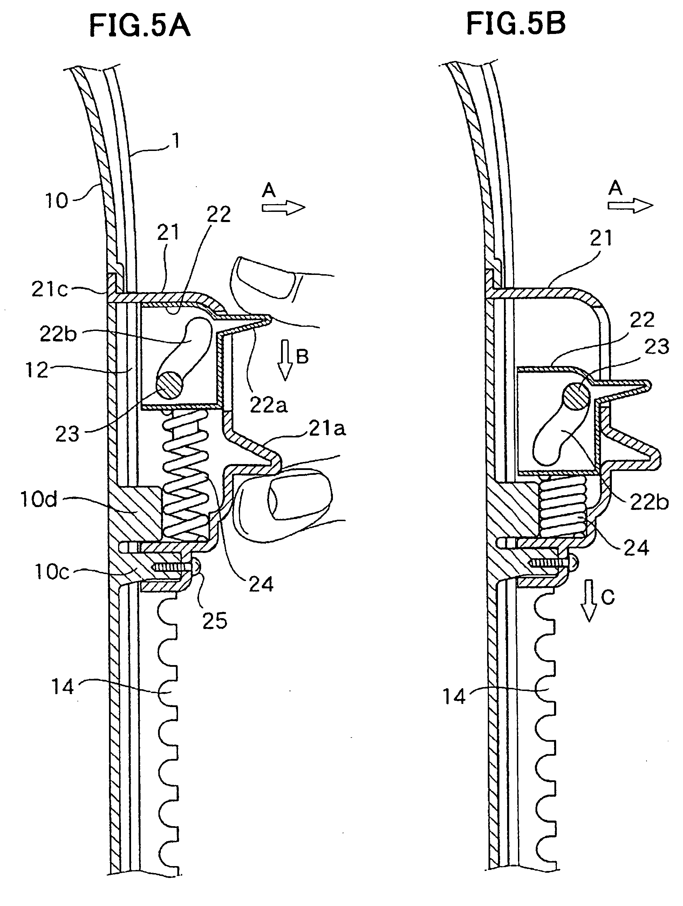

Respective components are retained and assembled in the slider **21** with the rod guiding block **22** being biased by the spring **24.** At this time, the harness support rod **23** passes through, from the lateral direction, the lateral slotted openings **21b** formed in the side faces of the slider **21,** and rod guiding slits **22b** curved gently and formed in the side faces of the rod guiding block **22** (see FIGS. 5A and 5B). Moreover, the catch hook **21c** of the slider **21** is caught by the hook catch opening **10b** of the back plate **10** through the slider holding opening **13** from the rear side of the main body shell **1,** and a fastening screw **25** is screwed in the slider fastening mount **10d.** Accordingly, the rod height adjusting mechanism **20** is attached to the rear of the back plate **10** via the main body shell **1** in an ascendable and descendable manner.

### <Adjustment of Height of Harness Support Rod>

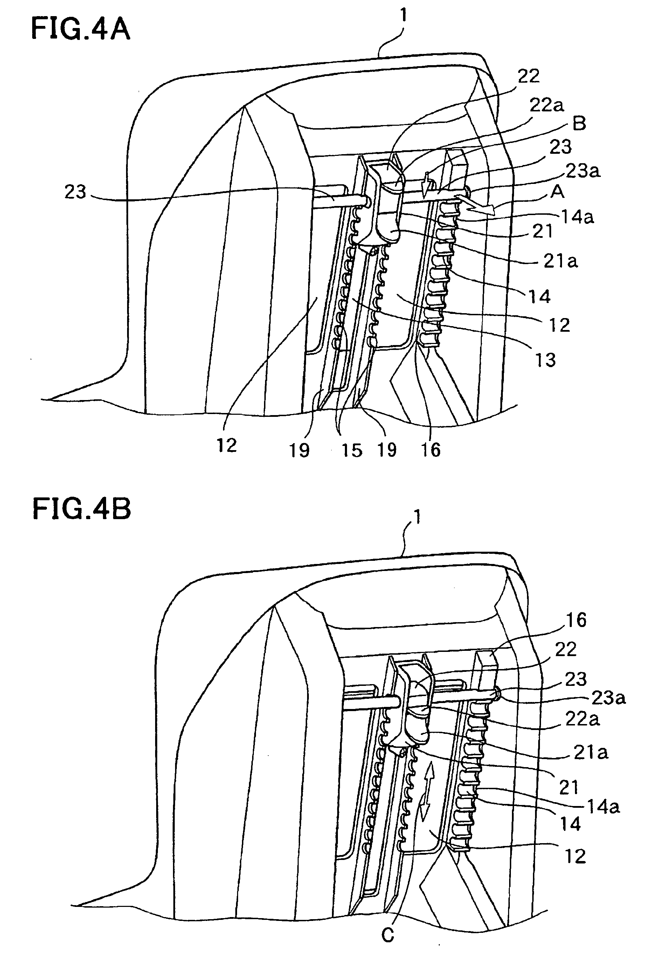

Next, with reference to each of FIGS. 4A to 5B, an explanation will be given of an operation of the rod height adjusting mechanism **20** and an adjustment of the height of the harness support rod **23.** In FIGS. 4A to 5B, illustration of the belt inserting hook **21e** at the rear of the slider **21** is omitted.

FIG. 4A shows a condition in which the slider **21** of the rod height adjusting mechanism **20** is located at the uppermost position, the harness support rod **23** is retained in the rod holding grooves **14** and **15,** and the flanges **23a** are retained in respective flange holding grooves **14a.** FIG. 5A shows a cross section inside the rod height adjusting mechanism **20** in this condition. In a condition shown in FIG. 5A, the rod guiding block **22** in the slider **21** of the rod height adjusting mechanism **20** is biased upwardly by the built-in spring **24,** and is located at the uppermost position. Moreover, the harness support rod **23,** held by the lateral slotted openings **21b** of the slider **21** and the rod guiding slits **22b** of the rod guiding block **22,** has the center part and the flanges **23a** retained in the uppermost semi-circular grooves of the rod holding grooves **14** and **15,** and has flanges **23a** retained in the semi-circular groove of the flange holding groove **14a.** From this condition, as shown in FIG. 5A, a user pinches the knob **22a** of the rod guiding block **22** and the knob **21a** protrudingly provided on the slider **21** by fingers, and pushes down the rod guiding block **22** against the biasing force by the spring **24** (an arrow B in FIGS. 4A and 5A). When the rod guiding block **22** is pushed down, as shown in FIG. 5B, the harness support rod **23** moves upwardly in the rod guiding slits **22b** along the gentle curve of the rod guiding slits **22b.** Upon moving upwardly in the rod guiding slits **22b,** the harness support rod **23** is moved in a direction apart from the rod holding grooves **14** and **15** (an arrow A in FIG. 4A). Hence, as shown in FIG. 5B, by pushing down the knob **22a** of the rod guiding block **22,** the user can ascend and descend the slider **21** to a desired height as shown in FIG. 4B (an arrow C in FIGS. 4B and 5B). Next, the user adjusts the harness support rod **23** to a desired height and releases the knob **22a** of the rod guiding block **22,** thereby allowing the center part of the harness support rod **23** to be retained in the rod holding grooves **14** and **15** closest to that height, and also allowing the flanges **23a** to be retained in respective flange holding grooves **14a** outwardly of the rod holding groove **14.** Accordingly, the harness support rod **23** has its position stably held. When the harness support rod **23** moves in this manner, the back plate **10** also moves up and down together with the slider **22** and the harness support rod **23.** Hence, the user can move the back plate **10** up and down through a one-touch operation in order to easily change the height of the shoulder harnesses **4.** Moreover, since the back plate **10** is provided with the two harness through holes **11** that support respective right and left shoulder harnesses **4,** the user can adjust respective right and left heights of the right and left shoulder harnesses **4** through a single operation.

### <Rod height adjusting mechanism: Second Embodiment>

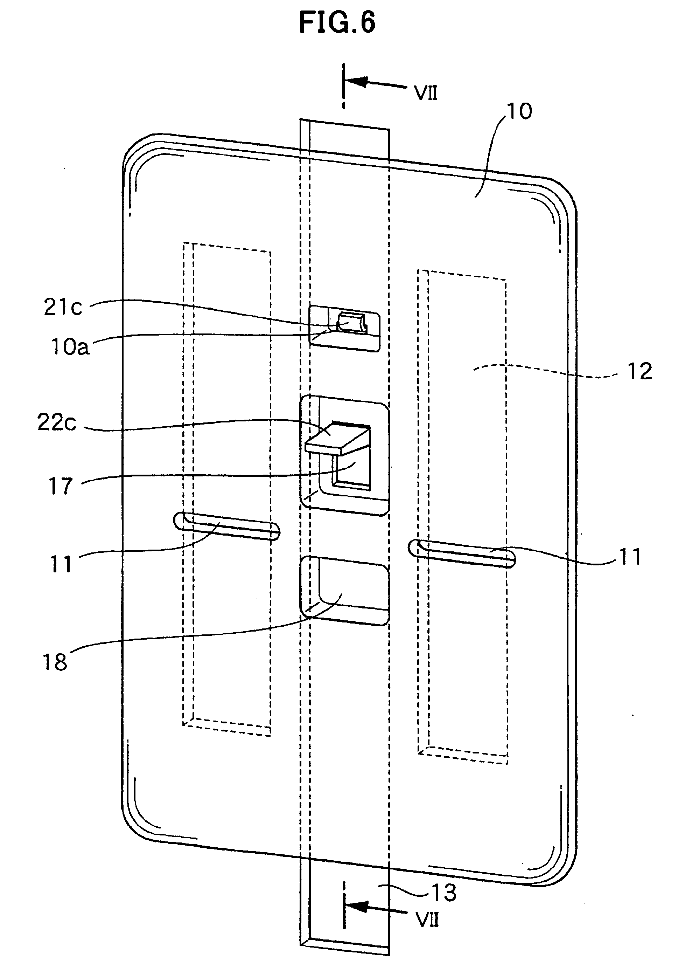

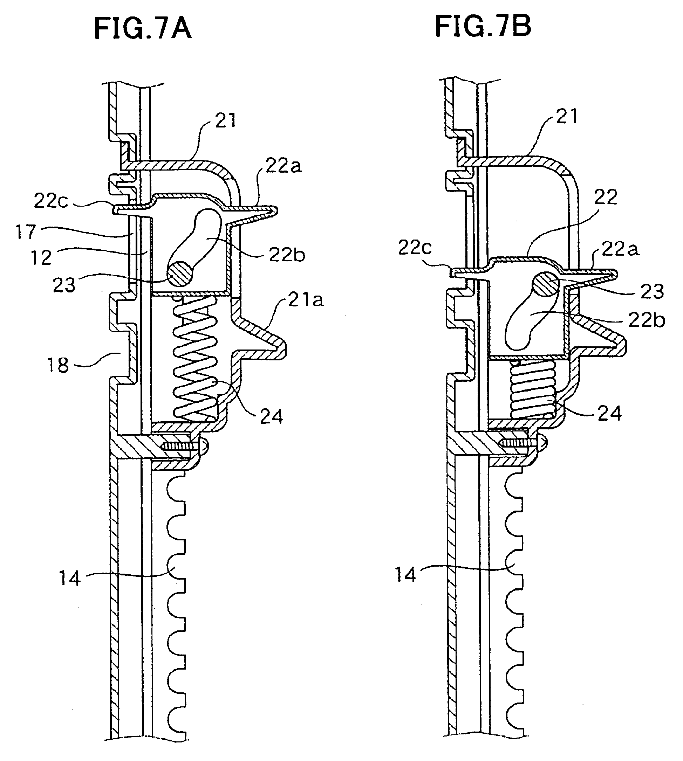

FIG. 6 is a perspective view showing the back plate **10** to which a rod height adjusting mechanism **20** of a second embodiment is attached. FIGS. 7A and 7B are partial cross-sectional views of the second embodiment corresponding to FIGS. 5A and 5B. As shown in FIGS. 7A and 7B, according to the second embodiment, a push-down operation to the rod guiding block **22** can be given from the front of the back plate **10.** As shown in FIGS. 6 and 7A, the rod guiding block **22** of the first embodiment shown in FIG. 5A has its shape changed, and a knob **22c** (hereinafter, referred to a front knob) is provided at the back-plate-**10** side. The back plate **10** is provided with an opening **17** having a function as a moving space for the front knob **22c,** and the front knob **22c** protrudes from the opening **17.** Moreover, a recess **18** having a function corresponding to the knob **21a** (see FIG. 5A) at the slider-**21** side is formed on the front face of the back plate **10.** The user puts a finger to the recess **18** in order to push down the front knob **22c** of the rod guiding block **22.** When pushed down using the front knob **22c,** as shown in FIG. 7B, the harness support rod **23** moves upwardly in the rod guiding slits **22b** of the rod guiding block **22,** and moves to a position released from the rod holding groove **14.**

### <Rod height adjusting mechanism: Third Embodiment>

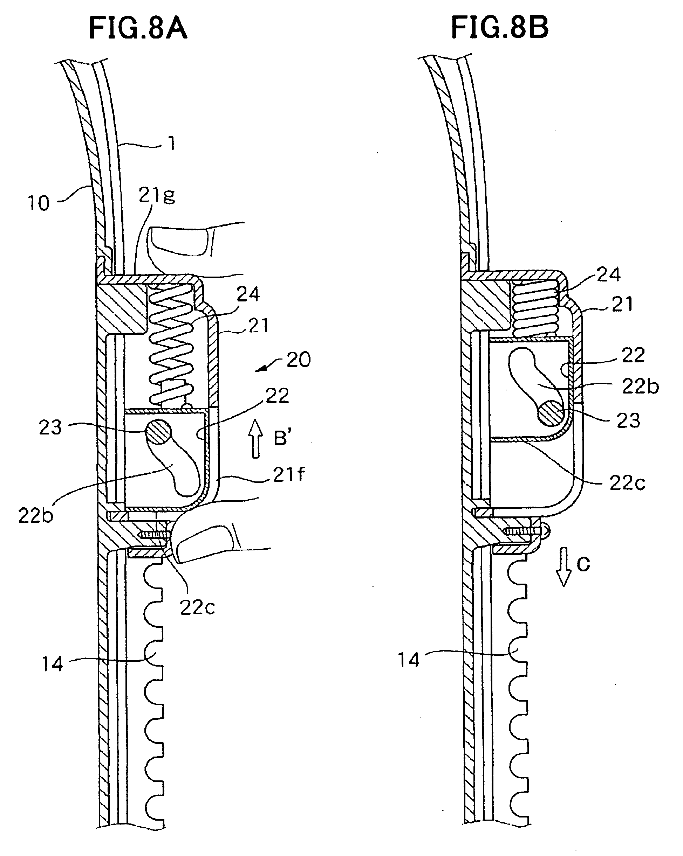

FIG. 8A shows a cross section of a rod height adjusting mechanism **20** according to a third embodiment. According to the third embodiment, the operational direction of the rod guiding block **22** is inverted upside down in comparison with the configuration of the first embodiment. Hence, the configuration of the rod height adjusting mechanism **20** of the third embodiment can be easily understood when compared with the configuration shown in FIG. 5A. First, in the slider **21** of the rod height adjusting mechanism **20** of the third embodiment, the rod guiding block **22** is biases down by the spring **24** provided upwardly and is located at the lowermost position. At this time, the harness support rod **23** has the center part retained in the semi-circular grooves of the rod holding grooves **14** and **15,** and has the flange **23a** retained in the semi-circular groove of the flange holding groove **14a** like the condition shown in FIG. 4A. In this condition, the user pinches a lower face **22c** of the rod guiding block **22** exposed from an opening **21f** formed in the slider **21** and an upper face **21g** thereof and pushes up the rod guiding block **22** against the biasing force by the spring 24 (an arrow B' in FIG. 8A). When the rod guiding block **22** is pushed up, as shown in FIG. 8B, the harness support rod **23** is moved downwardly in the rod guiding slits **22b** along the gentle curved lines of the rod guiding slits **22b.** Upon movement downwardly in the rod guiding slits **22b,** the harness support rod **23** moves to a position out of the rod holding groove **14.** Hence, by pushing up the lower face **22c** of the rod guiding block **22,** the user can descend the slider **21** of the rod height adjusting mechanism **20** to a desired height (an arrow C in FIG. 8B) like the case shown in FIG. 4B. When the slider **21** is located at the middle position within the movable range, it is needless to say that the slider **21** can be ascended and descended. Next, when the user adjusts the harness support rod **23** to a desired height, and stops pushing the lower face **22c** of the rod guiding block **22,** because of the similar effect as that of the first embodiment, the harness support rod **23** is retained in the rod holding grooves **14** and **15** closest to that height, and the flanges **23a** are also retained in respective flange holding grooves **14a** outwardly of the rod holding groove **14.** Hence, the harness support rod **23** can have its position stably held.

### <Configuration of Cover Cushioning>

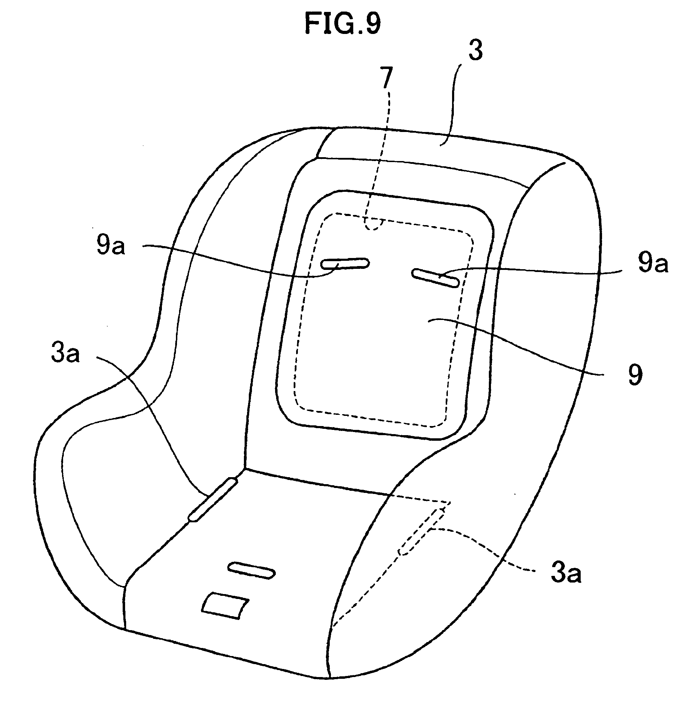

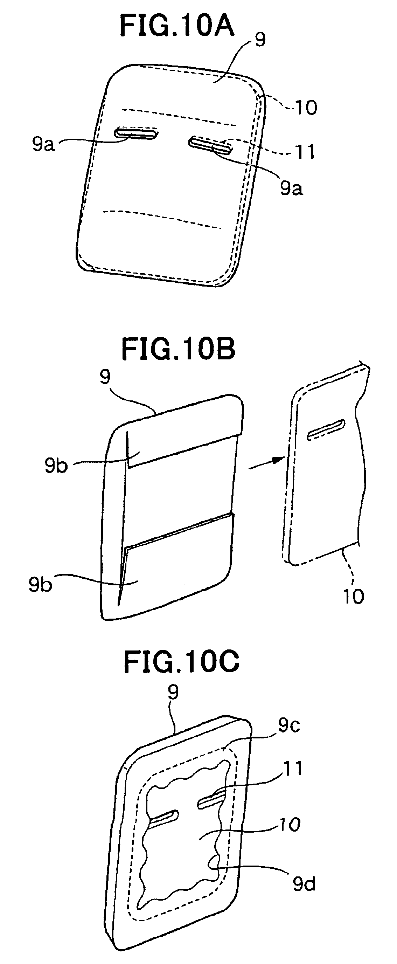

According to general child seats, a cover cushioning **3** is overlaid so as to cover the whole seat, back and sides of the main body shell 1 made of a synthetic resin at a side where a child sits down. Accordingly, the comfort with a sitting child being restrained is ensured. Meanwhile, according to the child seat of the embodiments, the back plate **10** is provided at a position where the back of a child contacts. As explained above, the back plate **10** moves up and down when the heights of the shoulder harnesses **4** for a sitting child are adjusted. Accordingly, it is preferable to separately provide a cushioning that covers the back plate **10** relative to the main part of the cover cushioning **3.** An explanation will be given of a cushioning that covers the back plate **10** of the child seat of the embodiments with reference to FIGS. 9 and 10.

As shown in FIG. 9, formed in the back of the cover cushioning **3** is an opening **7** cut out in a rectangular shape. The opening **7** is set to be a size within a range where the back plate **10** moves when the back plate **10** is ascended and descended. The back plate **10** facing the opening **7** is covered with a cover **9** dedicated for the back plate **10.** FIG. 9 shows a condition in which a part of the back plate (unillustrated) covered with the cover **9** is exposed from the opening **7,** and the whole contour of the back plate covered with the cover **9** is indicated by dashed lines.

FIG. 10A shows the back plate **10** covered with the cover **9.** As shown in FIG. 10A, the cover **9** is provided with slits **9a** where respective harnesses **4** pass through like the harness through holes **11** at positions corresponding thereto provided in the back plate **10.** FIGS. 10B and 10C show illustrative covers **9** that are preferable. In the example case shown in FIG. 10B, the cover **9** is provided with a pocket **9b** and attached to the back plate **10** from a side. Moreover, in the example case shown in FIG. 10C, an elastic material **9c** like a rubber string that narrows down an opening at the rear side is provided around the opening of the cover **9.** Accordingly, with the back plate **10** being covered by the cover **9,** an opening **9d** at the rear side is narrowed down and the cover **9** is tensioned, thereby covering the back plate **10.**

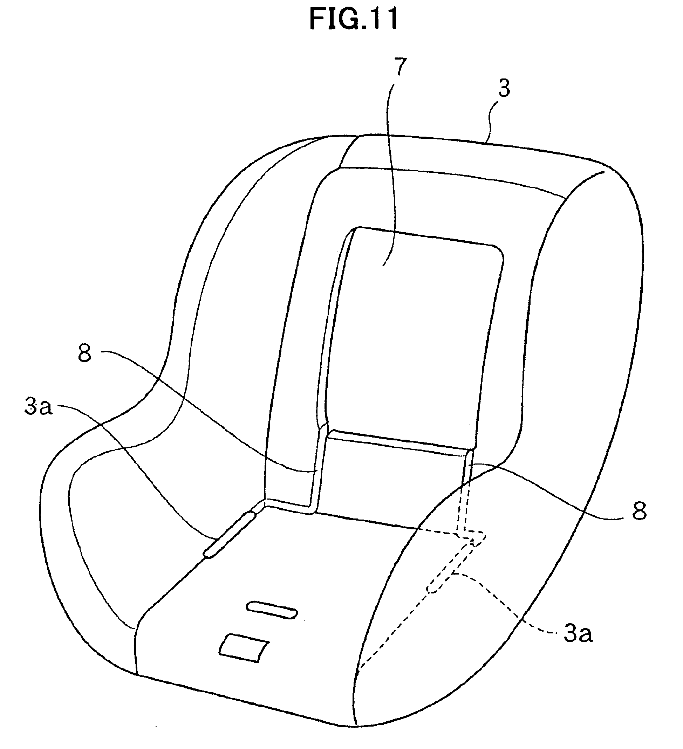

FIG. 11 is an explanatory diagram showing an example case in which the attachment of the whole cover cushioning **3** is improved. As shown in this figure, notching lines **8** are provided between the lower end of the opening **7** of the cover cushioning **3** and waist harness through holes **3a** of the cover cushioning **3,** so that the whole cover cushioning **3** can be easily detached from or attached to the main body shell **1** without the tip of the harness **4** (unillustrated) being released from the connector (unillustrated) that holds the harness **4** at the rear of the main body shell **1.**

The present invention is not limited to the above-explained embodiments, and can be changed and modified in various forms within the scope of the present invention described in claims. That is, embodiments that change and modify technical means described in claims as needed are also included within the scope and spirit of the present invention.

Having described and illustrated the principles of this application by reference to one or more preferred embodiments, it should be apparent that the preferred embodiments may be modified in arrangement and detail without departing from the principles disclosed herein and that it is intended that the application be construed as including all such modifications and variations insofar as they come within the spirit and scope of the subject matter disclosed herein.

## Claims

1. A child seat that allows adjustment of, at a backrest, respective right and left heights of right and left shoulder harnesses (**4**) restraining a sitting child, comprising:
a main body shell (**1**) that has rod holding grooves (**14**, **15**) which are a plurality of grooves arranged in a vertical direction and formed in a rear face of the main body shell (**1**);
a back plate (**10**) which is disposed on a back of the main body shell (**1**) and is provided with shoulder harness through holes (**11**) where the right and left shoulder harnesses (**4**) are respectively inserted in order to support the right and left shoulder harnesses (**4**); and
a rod height adjusting mechanism (**20**) which is provided at a rear face of the back plate (1**0)** and includes a harness support rod (**23**) that moves in the vertical direction together with the back plate (**10**), and changes a condition of the harness support rod (**23**) between a condition in which the harness support rod (**23**) is held in the rod holding groove (**14**, **15**) and a condition in which the harness support rod (**23**) is released from the rod holding groove (**14**, **15**) and is movable in the vertical direction, wherein the rod height adjusting mechanism (**20**) comprises a slider (**21**) which is attached to the rear face of the back plate (**10**) and which is slidable in the vertical direction while holding the harness support rod (**23**), a rod guiding block (**22**) which, together with a movement in the vertical direction in the slider (**21**), retains the harness support rod (**23**) in the rod holding groove (**14**, **15**) or releases the harness support rod (**23**) from the rod holding groove (**14**, **15**) in order to make the harness support rod (**23**) ascendable and descendable, and a biasing unit that biases the rod guiding block (**22**) in a direction in which the harness support rod (**23**) is retained in the rod holding groove (**14**, **15**), and wherein the harness support rod (**23**) is released from the rod holding groove (**14**, **15**) when the rod guiding block (**22**) is moved relative to the slider (**21**) against biasing force by the biasing unit,
**characterized in that**
the slider (**21**) has a lateral slotted opening (**21b**) formed in a side face,
the rod guiding block (**22**) has a rod guiding slit (**22b**) formed in a side face,
the harness support rod (**23**) is inserted in the lateral slotted opening (**21b**) of the slider (**21**) and the rod guiding slit (**22b**) of the rod guiding block (**22**), and
the harness support rod (**23**) moves along the lateral slotted opening (**21**b) and the rod guiding slit (**22b**) when the rod guiding block (**22**) is pushed down or pushed up against the biasing unit, and thus is released from the rod holding groove (**14**, **15**).

2. The child seat according to claim 1, **characterized in that**
the rod guiding block (**22**) is provided with a knob (**22c**) protruding toward the main body shell (**1**), and
the back plate (**10**) is provided with an opening (**17**) where the knob **(**22c) is exposed and a recess (**18**) for assisting an operation given to the knob (**22c**).

3. The child seat according to claim 1 or claim 2, **characterized in that**
the harness support rod (**23**) has flanges (**23a**) formed at both ends,
the main body shell (1) has flange holding grooves (**14a**) formed adjacent to the rod holding groove (**14**) in the rear face, and
when the harness support rod (**23**) is retained in the rod holding groove (**14, 15**), the flanges (**23a**) are retained in the flange holding grooves (**14a**), and thus a movement of the harness support rod (**23**) in an axial direction is suppressed.

4. The child seat according to any one of claims I to 3, **characterized in that**
the main body shell (**1**) is covered with a cover cushioning (**3**) provided with an opening (**7**) where a part of the back plate (**10**) is exposed, and
a portion of the back plate (**10**) corresponding to the opening (**7**) is covered by a cover (**9**).

## Patentansprüche

1. Kindersitz, welcher eine Einstellung einer entsprechenden rechten und linken Höhe einer rechten bzw. linken Schulter-Halterung (4), welche ein sitzendes Kind zurückhalten, an einer Rückenlehne ermöglicht, umfassend:
eine Hauptkörperschale (1), welche Vertiefungen (14, 15) zum Halten einer Stange aufweist, die mehrere Vertiefungen sind, die in einer vertikalen Richtung angeordnet und in einer rückseitigen Fläche der Hauptkörperschale (1) ausgebildet sind;
eine rückseitigen Platte (10), welche auf einer Rückseite der Hauptkörperschale (1) angeordnet ist und mit Durchgangslöchern (11) für eine Schulterhalterung versehen ist, in welche die rechte bzw. linke Schulterhalterung (4) eingeführt wird, um die rechte und linke Schulterhalterung (4) zu halten; und
einen Mechanismus (20) zur Einstellung der Höhe der Stange, welcher an einer hinteren Fläche der rückseitigen Platte (10) vorhanden ist und eine Stange (23) zum Halten der Halterung aufweist, welche sich in der vertikalen Richtung zusammen mit der rückseitigen Platte (10) bewegt, und einen Zustand der Stange (23) zum Halten der Halterung zwischen einem Zustand, in welchem die Stange (23) zum Halten der Halterung in der Vertiefung (14, 15) zum Halten der Stange gehalten wird, und einem Zustand, in welchem die Stange (23) zum Halten der Halterung von der Vertiefung (14, 15) zum Halten der Stange gelöst ist und in der vertikalen Richtung bewegbar ist, verändert, wobei der Mechanismus (20) zur Einstellung der Höhe der Stange umfasst ein Gleitstück (21), welches an der hinteren Fläche der rückseitigen Platte (10) angebracht ist und in der vertikalen Richtung gleitbar ist während es die Stange (23) zum Halten der Halterung hält, einen Block (22) zum Führen der Stange, welcher zusammen mit einer Bewegung in der vertikalen Richtung in dem Gleitstück (21) die Stange (23) zum Halten der Halterung in der Vertiefung (14, 15) zum Halten der Stange hält oder die Stange (23) zum Halten der Halterung aus der Vertiefung (14, 15) zum Halten der Stange löst, um die Stange (23) zum Halten der Halterung aufwärts und abwärts bewegbar zu machen, und eine Vorspanneinheit, welche den Block (22) zum Führen der Stange in einer Richtung vorspannt, in welcher die Stange (23) zum Halten der Halterung in der Vertiefung (14, 15) zum Halten der Stange gehalten wird, und wobei die Stange (23) zum Halten der Halterung aus der Vertiefung (14, 15) zum Halten der Stange gelöst wird, wenn der Block (22) zum Führen der Stange relativ zu dem Gleitstück (21) gegen die Vorspannkraft durch die Vorspanneinheit bewegt wird,
**dadurch gekennzeichnet,**
**dass** das Gleitstück (21) eine seitliche Öffnung (21b) in Form eines Schlitzes, welche in einer Seitenfläche ausgebildet ist, aufweist,
**dass** der Block (22) zum Führen der Stange einen Schlitz (22b) zum Führen der Stange aufweist, welcher in einer Seitenfläche ausgebildet ist,
**dass** die Stange (23) zum Halten der Halterung in der seitlichen Öffnung (21 b) in Form eines Schlitzes des Gleitstücks (21) und in den Schlitz (22b) zum Führen der Stange des Blocks (22) zum Führen der Stange eingeführt ist, und
**dass** sich die Stange (23) zum Halten der Halterung entlang der seitlichen Öffnung (21 b) in Form eines Schlitzes und des Schlitzes (22b) zum Führen der Stange bewegt, wenn der Block (22) zum Führen der Stange nach unten oder nach oben gegen die Vorspanneinheit gedrückt wird und somit aus der Vertiefung (14, 15) zum Halten der Stange gelöst wird.

2. Kindersitz nach Anspruch 1,
**dadurch gekennzeichnet,**
**dass** der Block (22) zum Führen der Stange mit einem Knopf (22c) versehen ist, welcher zu der Hauptkörperschale (1) hervorragt, und
**dass** die rückseitige Platte (10) mit einer Öffnung (17), durch welche der Knopf (22c) freiliegt, und mit einer Vertiefung (18), um eine Handhabung bezüglich des Knopfes (22c) zu unterstützen, versehen ist.

3. Kindersitz nach Anspruch 1 oder Anspruch 2,
**dadurch gekennzeichnet,**
**dass** die Stange (23) zum Halten der Halterung Flansche (23a) aufweist, welche an beiden Enden ausgebildet sind,
**dass** die Hauptkörperschale (1) Vertiefungen (14a) zum Halten eines Flansches aufweist, welche benachbart zu der Vertiefung (14) zum Halten der Stange in der hinteren Fläche ausgebildet sind, und
**dass** die Flansche (23a) in den Vertiefungen (14a) zum Halten eines Flansches gehalten werden, wenn die Stange (23) zum Halten der Halterung in der Vertiefung (14, 15) zum Halten der Stange gehalten wird, und somit eine Bewegung der Stange (23) zum Halten der Halterung in einer axialen Richtung unterdrückt wird.

4. Kindersitz nach einem der Ansprüche 1 bis 3,
**dadurch gekennzeichnet,**
**dass** die Hauptkörperschale (1) mit einem Abdeckpolster (3) abgedeckt ist, welches mit einer Öffnung (7) versehen ist, durch welche ein Teil der rückseitigen Platte (10) freiliegt, und
**dass** ein Abschnitt der rückseitigen Platte (10), welcher mit der Öffnung (7) korrespondiert, durch eine Abdeckung (9) abgedeckt ist.

## Revendications

1. Siège pour enfant qui permet le réglage, au niveau d'un dossier, des hauteurs droite et gauche respective des harnais d'épaules droite et gauche (4) retenant un enfant assis, comprenant:
une coque de corps principal (1) qui a des rainures de maintien de tige (14, 15) qui sont une pluralité de rainures agencées dans une direction verticale et formées dans une face arrière de la coque de corps principal (1);
une plaque arrière (10) qui est disposée sur un arrière de la coque de corps principal (1) et est prévue avec des trous de passage d'harnais d'épaule (11) dans lesquels les harnais d'épaule droit et gauche (4) sont respectivement insérés afin de supporter les parties d'épaule droite et gauche (4); et
un mécanisme de réglage de hauteur de tige (20) qui est prévu au niveau d'une face arrière de la plaque arrière (10) et comprend une tige de support de harnais (23) qui se déplace dans la direction verticale conjointement avec la plaque arrière (10) et modifie une condition de la tige de support de harnais (23) entre une condition dans laquelle la tige de support de harnais (23) est maintenue dans la rainure de maintien de tige (14, 15) et une condition dans laquelle la tige de support de harnais (23) est libérée de la rainure de maintien de tige (14, 15) et est mobile dans la direction verticale, dans lequel le mécanisme de réglage de hauteur de tige (20) comprend une glissière (21) qui est fixée à la face arrière de la plaque arrière (10) et qui peut coulisser dans la direction verticale tout en maintenant la tige de support de harnais (23), un bloc de guidage de tige (22) qui, conjointement avec un mouvement dans la direction verticale dans la glissière (21), retient la tige de support de harnais (23) dans la rainure de maintien de tige (14, 15) ou libère la tige de support de harnais (23) de la rainure de maintien de tige (14, 15) afin de permettre à la tige de support de harnais (23) de monter et de descendre, et une unité de sollicitation qui sollicite le bloc de guidage de tige (22) dans une direction dans laquelle la tige de support de harnais (23) est retenue dans la rainure de maintien de tige (14, 15), et dans lequel la tige de support de harnais (23) est libérée de la rainure de maintien de tige (14, 15) lorsque le bloc de guidage de tige (22) est déplacé par rapport à la glissière (21) contre la force de sollicitation par l'unité de sollicitation,
**caractérisé en ce que**:
la glissière (21) a une ouverture latérale fendue (21b) formée dans une face latérale,
le bloc de guidage de tige (22) a une fente de guidage de tige (22b) formée dans une face latérale,
la tige de support de harnais (23) est insérée dans l'ouverture latérale fendue (21 b) de la glissière (21) et la fente de guidage de tige (22b) du bloc de guidage de tige (22), et
la tige de support de harnais (23) se déplace le long de l'ouverture latérale fendue (21b) et la fente de guidage de tige (22b) lorsque le bloc de guidage de tige (22) est poussé vers le bas ou poussé vers le haut contre l'unité de sollicitation, et est donc libéré de la rainure de maintien de tige (14, 15).

2. Siège pour enfant selon la revendication 1, **caractérisé en ce que**:
le bloc de guidage de tige (22) est prévu avec un bouton (22c) faisant saillie vers la coque de corps principal (1), et
la plaque arrière (10) est prévue avec une ouverture (17) où le bouton (22c) est exposé et un évidement (18) pour aider une opération transmise au bouton (22c).

3. Siège pour enfant selon la revendication 1 ou la revendication 2, **caractérisé en ce que**:
la tige de support de harnais (23) a des brides (23a) formées aux deux extrémités,
la coque de corps principal (1) a des rainures de maintien de bride (14a) formées de manière adjacente à la rainure de maintien de tige (14) dans la face arrière, et
lorsque la tige de support de harnais (23) est retenue dans la rainure de maintien de tige (14, 15), les brides (23a) sont retenues dans les rainures de maintien de bride (14a), et ainsi un mouvement de la tige de support de harnais (23) dans une direction axiale est supprimé.

4. Siège pour enfant selon l'une quelconque des revendications 1 à 3, **caractérisé en ce que**:
la coque de corps principal (1) est recouverte avec un rembourrage de recouvrement (3) prévu avec une ouverture (7) où une partie de la plaque arrière (10) est exposée, et
une partie de la plaque arrière (10) correspondant à l'ouverture (7) est recouverte par un recouvrement (9).
